Europäisches Patentamt

European Patent Office

Office européen des brevets

(19)

(11) Veröffentlichungsnummer: **0 086 414**
**B1**

# (12) EUROPÄISCHE PATENTSCHRIFT

(45) Veröffentlichungstag der Patentschrift:
**06.08.86**

(51) Int. Cl.⁴: **B 60 R 22/18**

(21) Anmeldenummer: **83101062.4**

(22) Anmeldetag: **04.02.83**

(54) Zusatzvorrichtung für Kraftfahrzeugsicherheitsgurte mit automatischer Rückspulvorrichtung.

(30) Priorität: **12.02.82 CH 873/82**

(43) Veröffentlichungstag der Anmeldung:
**24.08.83 Patentblatt 83/34**

(45) Bekanntmachung des Hinweises auf die Patenterteilung:
**06.08.86 Patentblatt 86/32**

(84) Benannte Vertragsstaaten:
**AT BE CH DE FR GB IT LI LU NL SE**

(56) Entgegenhaltungen:
**CH - A - 600 900**
**FR - A - 2 427 103**
**GB - A - 2 005 130**
**US - A - 3 981 052**

(73) Patentinhaber: **Buchmeier, Robert B.,**
**Waffenplatzstrasse 87, CH-8002 Zürich (CH)**

(72) Erfinder: **Buchmeier, Robert B., Waffenplatzstrasse 87,**
**CH-8002 Zürich (CH)**

(74) Vertreter: **Troesch, Hans Alfred, Dr. Ing. et al,**
**Walchestrasse 19, CH-8035 Zürich (CH)**

**Beschreibung**

Die vorliegende Erfindung betrifft eine Zusatzvorrichtung für Kraftfahrzeugsicherheitsgurte mit automatischer Rückspulvorrichtung, mit einer Grundplatte und einem an dieser angeordneten beweglichen Klemmteil sowie mindestens einem Gurtenumlenker als Befestigungsstelle für die Grundplatte.

Bei den heute bekannten, zumeist benützten Sitzgurten ist deren eines Ende durch eine federbelastete Rolle ständig so aufgespult und ge-spannt gehaltert, dass langsame Ausziehbewe-gungen der Sitzgurte und mithin des angegurteten Insassen entgegen der Federkraft ermöglicht werden. Bei einer plötzlichen Bewegung, d.h. grossen Beschleunigungen, wird die Sitzgurte infolge der Massenträgheit, wie sie beispielsweise bei plötzlichen Verzögerungen des Kraftfahrzeuges bei Berührung mit einem Hindernis auftreten können, durch die Feder blockiert und die Gurte an ihren beiden Enden festgehalten, so dass sie die von ihr verlangte Rückhaltefunktion ausüben kann.

Normalerweise wird diese Gurte heutzutage schon von den Automobilherstellern angebracht, wobei deren Anbringen auf unterschiedliche Weise erfolgt. Die Benutzung dieser Gurte, welche ständig unter Federspannung steht, wird oft als lästig empfunden, insbesondere da sie über die oberen Brustpartien gelegt wird und daher bei vielen Fahrern ein unangenehmes Beklemmungsgefühl erregt.

Aus diesem Grunde wurde eine Zusatzvorrich-tung für derartige Kraftfahrzeugsicherheitsgur-ten entwickelt, welche ermöglicht, die durch die Feder gegebene Vorspannung am Gurt zu lokkern, so dass der Benützer von keinem Gurtendruck eingeengt wird. Diese Zusatzvorrichtung ist derart konzipiert, das bei einem plötzlichen Auftreten einer Zugkraft entgegen dem Zug der eingebauten Feder die Zusatzvorrichtung automatisch geöffnet wird. Dadurch wird die Gurte unter Federspannung gesetzt, so dass auch die Blockiereinrichtung der Feder im dargelegten Sinne funktioniert. Diese Vorrichtung, die gemäss des Gattungsbegriffes des Anspruchs 1 angedeutet ist, ist vorher aus dem Dokument GB-A-2 005 130 bekannt. Diese bekannte Zusatzvorrich-tung ist für diejenigen Automobile, bei welchen die Gurten vor ihrem Umlenken und dem Begurten des Fahrers über eine längere Strecke frei im Wageninnern verlaufen, vorgesehen. Solche kurzen Gurtenkanäle werden von gewissen Automobilherstellern weiterhin benutzt. Auch findet man diese relativ langen freien Strecken von 10 und mehr cm bei Gurten, welche nachträglich eingebaut wurden. Es sind aber auch Automobiltypen bekannt geworden, bei denen die freie Strecke zwischen dem oberen Austritt aus dem Gurtenkanal und der Umlenkstelle nur einige cm beträgt. Auch gibt es Typen, bei welchen die Um-lenkeinrichtung direkt verborgen in Karosserie-schächten angeordnet ist, wobei die Gurte nur durch einen relativ schmalen Spalt nach aussen geleitet wird. Die bekannten Zusatzvorrichtungen eignen sich für das Anbringen bei langen Füh-rungskanälen oder geschlossenen Führungska-nälen, wie sie insbesondere bei teureren Automobilen vorgesehen sind, nicht.

Die vorliegende Erfindung bezweckt die Schaf-fung einer universell verwendbaren Zusatzvor-richtung, welche allen bisher bekannt gewordenen Gurtenanlagen mühelos angepasst werden kann.

Eine derartige Zusatzvorrichtung zeichnet sich dadurch aus, dass ein hakenförmiges Zusatz-Organ, z. B. eine Zusatzklammer vorgesehen ist, welches es ermöglicht, die Grundplatte mit dem Gurtenumlenker zu verbinden.

Der Erfindungsgegenstand wird anschliessend beispielsweise anhand einer Figur erläutert.

Es zeigen:

Fig. 1 eine perspektivische Darstellung einer Zusatzvorrichtung mit einem Teilstück einer eingezogenen Gurte, in gelöstem Zustand,

Fig. 2 eine Seitenansicht einer Gurtenanlage, teilweise schematisch und teilweise im Schnitt dargestellt, mit relativ langem, am Fahrzeug befestigten Gurtenkanal,

Fig. 3 eine Aufsicht auf die Zusatzvorrichtung gemäss Fig. 1, mit angebauter Zusatz-Klammer

Fig. 4 eine Aufsicht auf eine Zusatz-Klammer

Fig. 5 eine Seitenansicht der Zusatz-Klammer

Fig. 6 eine mit der Grundplatte der Zusatzvorrichtung verbundene Zusatz-Klammer

Fig. 7 eine schematische Ansicht einer Gurtenanlage, teilweise im Schnitt, in einem Automobil mit in einem Karosserie-Pfosten angeordneten Gurtenkanal.

Die Anlage für Kraftfahrzeugsicherheitsgurte mit automatischer Rückspulvorrichtung umfasst eine federbelastete Rolle 1 in einem Gehäuse 2, welches an einer Karosserie 3 eines Fahrzeuges befestigt ist. Die federbelastete Rolle 1 dient der Aufnahme einer Rückhaltegurte 40, deren Ver-halten an späterer Stelle eingehend erläutert wird.

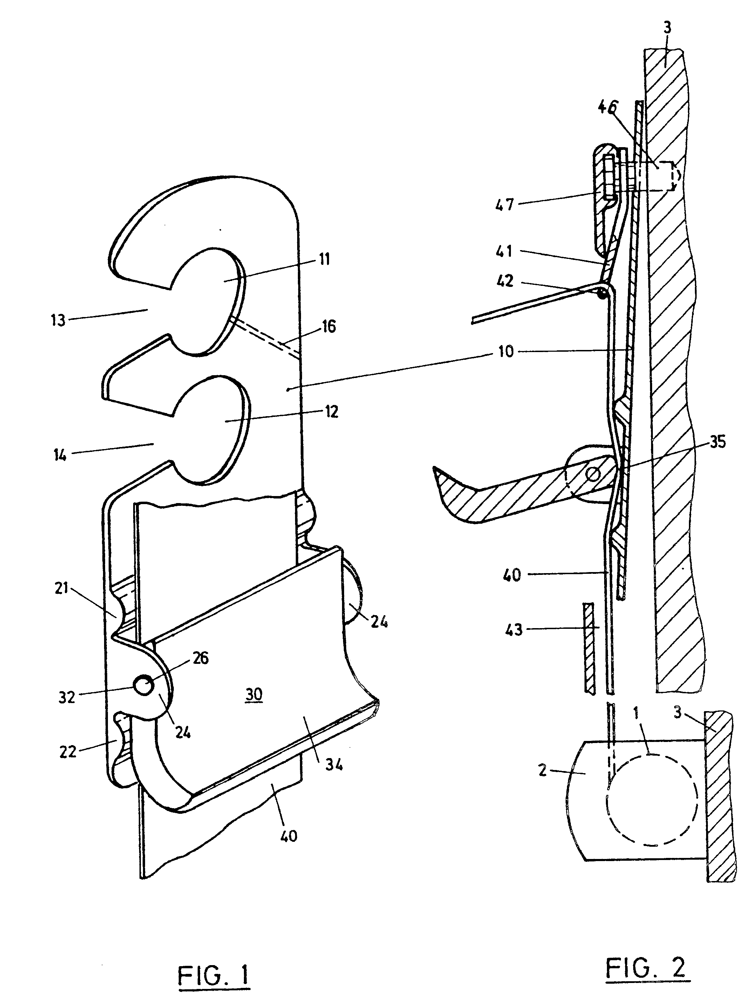

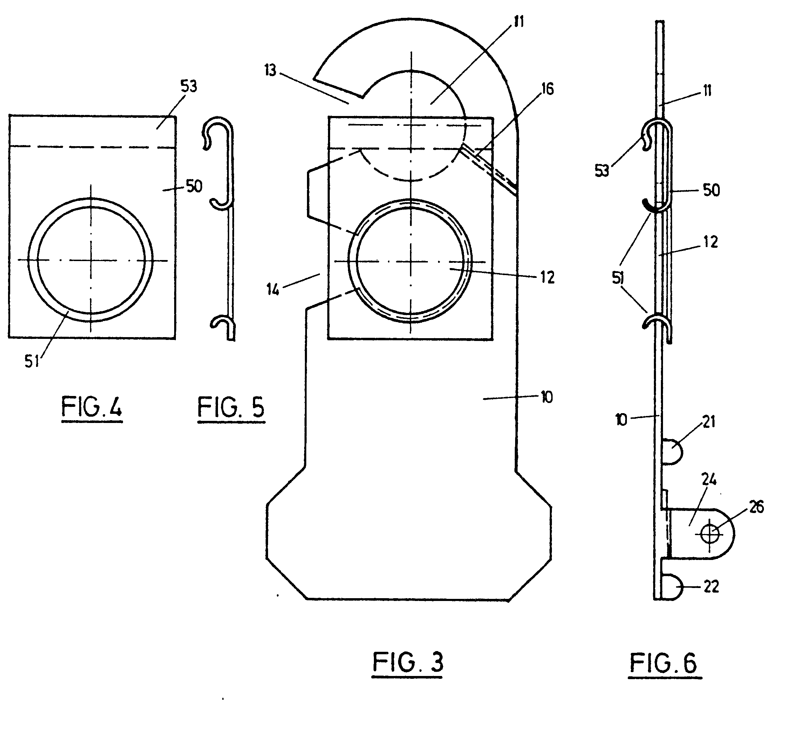

Die Zusatzvorrichtung, welche erlaubt, die Rückhaltegurte 40 in losem Zustand vorn über die Brust des anzugurtenden Fahrers zu führen, weist eine Grundplatte 10 mit zwei übereinanderliegenden Öffnungen 11 und 12 auf. Die Öffnungen 11 und 12 sind über eine Erweiterung 13 bzw. 14 an einer Seite offen. Diese Öffnungen 11 und 12 dienen zum Festhalten der Grundplatte 10 an einem Karosserieteil. Der zwischen den beiden Öffnungen 11 und 12 liegende Steg ist derart flexibel, dass zum Aufschieben der Platte 10 die entsprechende Erweiterung 13 bzw. 14 gedehnt werden kann, ohne dass dies zum Bruch der Platte 10 führt. Die Grundplatte 10 ist ferner mit einer Trennfuge 16 versehen, welche erlaubt, bei Verwendung der unteren Öffnung 12 den oberen Teil wegzubrechen, damit er beim Anbringen der restlichen Zusatzvorrichtung nicht stört. Gemäss den Figuren 1 und 2 befinden sich im unteren Teil der Grundplatte 10 zwei Erhebungen 21 und 22, zwischen denen seitlich je ein Lagerbock 24 mit Öffnungen 26 angeordnet ist. Diese dienen der Aufnahme zweier Zapfen 32 eines Klemmteiles 30. Dessen längerer Hebelarm ist als Griff 34 ausgebildet, während der kürzere eine Klemmfläche 35 aufweist. Beim Nachaussenschwenken des Klemmteiles 30 in der Fig. 2 dargestellten Weise presst die Klemmfläche 35 die Rückhaltegurte 40 gegen die Grundplatte 10 und hält damit die Gurte 40 entgegen der Kraft der die Gurte einziehenden federbelasteten Rolle 1 fest.

In Fig. 2 ist ein Teil eines Wageninneren dargestellt, wobei ein relativ langer Gurtenkanal 43 vorgesehen ist, der aber nicht bis zu einer vorgesehenen Befestigungsschraube 46 in der Karosserie reicht. Für diesen Fall ist vorgesehen, den oberen Teil der Grundplatte 10 längs der Trennfuge 16 wegzubrechen und über die Erweiterung 14 die Grundplatte 10 auf die Befestigungsschraube 46 zu schieben, so dass die Öffnung 12 diese Schraube 46 grösstenteils umfasst. Die Schraube 46 kann, wie Fig. 2 zeigt, mittels eines Kunststoffdeckels 47 zwecks besseren Aussehens abgedeckt werden.

Wenn der Gurtenkanal 43 zwischen seinem oberen Ende und der Befestigungsschraube 46 mehr Platz lässt, dann kann, wie bekannt, die Zusatzvorrichtung an der oberen Öffnung 11 befestigt werden. Wenn der Gurtenkanal bis ganz an die Befestigungsschraube 46 geführt ist, muss, wie anschliessend beschrieben, mit der Zusatzklammer die Zusatzvorrichtung an der Gurtenumlenkung 42 eingehängt werden.

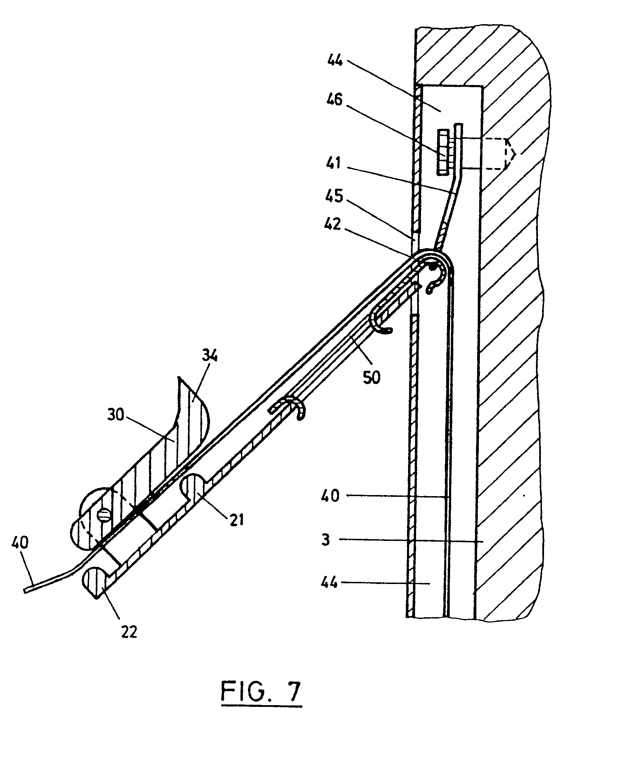

Es sind aber heute Automobile auf dem Markt, insbesondere teurere Marken, bei welchen ein fahrzeugseitiger Gurtenkanal 44 im Sinne der Fig. 7 vorgesehen ist. Der Kanal 44 weist auf üblicher Höhe einen Schlitz 45 zum Herausführen der Gurte 40 auf. Die Befestigungsschraube 46 ist hier, wie ersichtlich, im Inneren des Gurtenkanals 44 befestigt.

Um für den Fall der Ausführung gemäss Fig. 7 die Zusatzvorrichtung ebenfalls anbringen zu können, wird diese mit einer Zusatzklammer 50, die einen gebördelten, vorzugsweise segmentierten Rand 51 und einen oberen Einhänger 53 in Hakenform aufweist, ergänzt. Der Rand 51 und der Einhänger 53 bilden zwei Klemmelemente. Das Anbringen einer derartigen Klammer 50 ist in den Fig. 3 und 6 angedeutet. Diese Klammer 50 kann aus einem elastischen Material, z. B. Stahlblech, Kunststoff o. dgl. hergestellt sein. Sie ermöglicht das Vorschieben des Vorderteils der Grundplatte 10 mit der darauf montierten Klammer 50 und Einhängen dieses Gebildes mittels des oberen Einhängers 53 um den Umlenker 42. Die Rückhaltegurte 40 wird dann über den oberen Einhänger 53 und die Klammern 50 geführt und gelangt anschliessend zwischen den Klemmteil 30 und die Grundplatte 10. Bei dieser Anwendung ist der Klemmteil 30 in den Lagerböcken 24 gegenüber der Lage gemäss Fig. 2 um 180° geschwenkt, derart, dass wiederum ein Zug auf die Rückhaltegurte 40 in Pfeilrichtung den Klemmteil 30 verschwenkt und die Klemmfläche 35 ausser Eingriff mit der Gurte 40 bringt. Damit wird die Rückhaltegurte 40 wiederum frei beweglich. Sie steht wiederum unter dem Zug der federbelasteten Rolle 1.

Diese Ausführung der Zusatzvorrichtung mit dem Federstahlblatt ist an allen bisher bekannten Kraftfahrzeugsicherheitsgurtenanlagen anbringbar. Bei sehr kurzen Gurtenkanälen wird die Grundplatte in die obere Öffnung 11 eingehängt, bei längeren in die Öffnung 12, wobei der obere Teil der Grundplatte 10 an der Trennfuge 16 abgebrochen wird, und bei fahrzeugseitig ganz eingebauten Gurten mit Gurtenkanälen 44, wie sie Fig. 7 zeigt, wird die Zusatzvorrichtung durch Einhängen in der in Fig. 7 dargestellten Weise angeordnet. In jedem Fall genügt ein Zug auf die Rückhaltegurte 40 entgegen der Federkraft der Rolle 1, um diese aus der Festhaltung mittels des Klemmteiles 30 zu befreien und sie wiederum unter den Zug der automatischen Rückspulvorrichtung zu stellen.

Die analoge Anordnung erfolgt, wenn der Umlenkträger 41 mit Umlenker 42 oben, ·z. B. am Dach, befestigt ist oder wenn sich der Schlitz 45 im Dach befindet.

**Patentansprüche**

1. Zusatzvorrichtung für Kraftfahrzeugsicherheitsgurte (40) mit automatischer Rückspulvorrichtung (1) und Gurtenumlenker (42) mit einer Grundplatte (10) und einem an dieser angeordneten beweglichen Klemmteil (30), wobei die Grundplatte (10) mindestens eine Befestigungsstelle (11, 12) aufweist, dadurch gekennzeichnet, dass ein hakenförmiges Zusatzorgan vorgesehen ist, welches es ermöglicht, die Grundplatte (10) mit dem Gurtenumlenker (42) zu verbinden.

2. Zusatzvorrichtung nach Anspruch 1, dadurch gekennzeichnet, dass das Zusatz-Organ als Zusatzklammer (50) ausgebildet ist, die zwei Klemmelemente (51, 53) aufweist, wobei das eine (51) zum vorzugsweise federnden Verbinden mit der Grundplatte (10) dient und das andere (53) zum Verbinden der Grundplatte (20) mit dem Gurtenumlenker (42) dient.

3. Zusatzvorrichtung nach Anspruch 2, dadurch gekennzeichnet, dass die Grundplatte (10) mit zwei seitlich offenen Öffnungen (11, 12) versehen ist.

4. Zusatzvorrichtung nach Anspruch 3, dadurch gekennzeichnet, dass mindestens eine Öffnung (11, 12) zur Aufnahme des ersten Klemmelementes (51) der Zusatzklammer (50) vorgesehen ist.

5. Zusatzvorrichtung nach Anspruch 1, dadurch gekennzeichnet, dass der Klemmteil (30) bezüglich seiner Klemm/Öffnungslage wechselbar angeordnet ist, um die Öffnungsrichtung bei Gurtenzug bezüglich der Grundplatte (10) zu ändern.

**Claims**

1. Auxiliary device for vehicular safety-belts (40) with automatic rewind device (1) and belt guide (42), with a base plate (10) and a movable clamping piece (30) arranged thereon, in which the base plate (10) has at least one attachment point (11,12), characterized in that a hook-shaped auxiliary member is provided, which makes it possible to connect the base plate (10) with the belt guide (42).

2. Auxiliary device according to Claim 1, characterized in that the auxiliary member is constructed as an auxiliary clip (50), which has two clamping elements (51,53), one of which (51) serves for connection, preferably elastically, with the base plate (10), and the other (53) serves to connect the base plate (10) with the belt guide (42).

3. Auxiliary device according to Claim 2, characterized in that the base plate (10) is provided with two laterally open openings (11,12).

4. Auxiliary device according to Claim 3, characterized in that at least one opening (11,12) is provided to receive the first clamping element (51) of the auxiliary clip (50).

5. Auxiliary device according to Claim 1, characterized in that the clamping piece (30) is arranged so as to be changeable with regard to its clamping/opening position, in order to alter the opening direction with regard to the base plate (10).

**Revendications**

1. Accessoire pour ceintures de sécurité (40) de véhicules, munies d'un enrouleur automatique (1) et d'un organe de renvoi (42) de la ceinture, cet accessoire comportant une plaquette de base (10) et une pièce de coincement mobile (30) montée sur cette dernière, la plaquette de base (10) présentant au moins un point de fixation (11,12) caractérisé en ce qu'il est prévu un organe auxiliaire en forme de crochet, qui permet de rattacher la plaquette de base (10) à l'organe de renvoi (42) de la ceinture.

2. Accessoire selon la revendication 1, caractérisé en ce que l'organe auxiliaire est constitué par une griffe auxiliaire (50) qui comporte deux éléments d'accrochage (51,53) dont l'un (51) est utilisé pour la connexion, de préférence élastique, à la plaquette de base (10) et dont l'autre (53) sert à rattacher la plaquette de base (10) à l'organe de renvoi (42) de la ceinture.

3. Accessoires selon la revendication 2, caractérisé en ce que la plaquette de base (10) est pourvue de deux découpes (11,12) s'ouvrant sur le côté.

4. Accessoire selon la revendication 3, caractérisé en ce qu'au moins une découpe (11,12) est prévue pour recevoir le premier élément d'accrochage (51) de la griffe auxiliaire (50).

5. Accessoire selon la revendication 1, caractérisé en ce que la pièce de coincement (30) est montée ajustable en ce qui concerne sa position de coincement/ouverture, pour modifier son sens d'ouverture par rapport à la plaquette de base (10) lors d'une traction exercée sur la ceinture.

FIG. 1

FIG. 2

FIG.4    FIG. 5

FIG. 3

FIG. 6

FIG. 7